# NEUE EUROPÄISCHE PATENTSCHRIFT

(11) **EP 1 671 737 B2**
(45) Veröffentlichungstag und Bekanntmachung des Hinweises auf die Entscheidung über den Einspruch: **29.10.2014**
(45) Hinweis auf die Patenterteilung: 31.08.2011
(21) Anmeldenummer: 05024723.8
(22) Anmeldetag: 11.11.2005
(51) Int. Cl.: B23K 9/20

(54) **Verfahren und Netzteil zum Erzeugen eines elektrischen Lichtbogenstromes sowie Anlage zum Kurzzeit-Lichtbogenbolzenschweissen**
Process and apparatus for producing an electric arc current and apparatus for stud welding
Méthode et appareil pour la production d'un courant d'arc électrique ainsi que dispositif de soudage de goujons.

(30) Priorität: 14.12.2004 DE 102004062376
(43) Veröffentlichungstag der Anmeldung: 21.06.2006
(73) Patentinhaber: Newfrey LLC, Newark, Delaware 19711 (US)
(72) Erfinder: Schmitt, Klaus Gisbert, Dr., 35390 Giessen (DE); Scheffler, Heiko Gerhard, 64291 Darmstadt (DE); Schmidt, Wolfgang, 35447 Reiskirchen (DE)
(74) Vertreter: Steil, Christian

(56) Entgegenhaltungen:
- EP-A- 0 435 673
- EP-B1- 0 325 785
- EP-B1- 0 547 417
- EP-B1- 1 023 965
- EP-B1- 1 103 329
- WO-A1-00/00319
- WO-A1-91/01843
- DE-A1- 19 524 490
- DE-C2- 4 128 175
- DE-C2- 4 330 805
- DE-T2- 69 704 401
- DE-T2- 69 704 407
- JP-A- 62 252 677
- JP-Y2- H0 634 059
- US-A- 4 876 433
- ANDREAS W.E. NENTWIG ET AL: 'Wechselstrom - eine Alternative beim Lichtbogenbolzenschweissen?' STAHL FORMEN.FÜGEN.FERTIGEN 04 September 1997, Seiten 1 - 3, 89-91

## Beschreibung

Die vorliegende Erfindung betrifft ein Verfahren zum Erzeugen eines elektrischen Lichtbogenstromes zum Lichtbogenschweißen gemäß dem Oberbegriff des Anspruchs 1 bzw. zum Kurzzeit-Lichtbogenpressschweißen, wobei ein Bolzen auf ein Werkstück aufzuschweißen ist. Ein solche Verfahren ist im EP 0 435 673 offenbart.

Das Aufschweißen von Bolzen auf Werkstücke, insbesondere auf Bleche, wird auch als Bolzenschweißen bezeichnet. Man unterscheidet zwischen Verfahren mit Hubzündung und solchen mit Spitzenzündung.

Beim Bolzenschweißen mit Hubzündung wird ein Bolzen auf das Werkstück aufgesetzt und es wird ein Pilotstrom eingeschaltet. Anschließend wird der Bolzen von dem Werkstück abgehoben, wobei ein Lichtbogen gezogen wird.

Beim Spitzenzündungsverfahren wird der Bolzen generell in einem Abstand von dem Werkstück gehalten, mittels Federkraft auf das Werkstück zu bewegt und unmittelbar mit dem Kontakt von Bolzen und Werkstück wird der Lichtbogen durch eine Hochspannung (in der Regel eine Kondensatorentladung) entzündet (z.B. DE 43 13 502 C2).

Beim Kurzzeit-Lichtbogenschweißen mit Hubzündung (Bolzenschwei-βen) beträgt die Schweißzeit gewöhnlich 10 ms bis 100 ms.

Auf dem Gebiet der Kraftfahrzeugtechnik hat sich das Bolzenschweißen mit Hubzündung durchgesetzt. Ein Hauptgrund hierfür liegt darin, dass das Bolzenschweißen mit Spitzenzündung auf Grund der schlagartigen Lichtbogenzündung vergleichsweise laut ist.

In der Kraftfahrzeugtechnik ist es seit vielen Jahren bekannt, metallische Bolzen auf Stahlbleche aufzuschweißen. In den letzten Jahren hat der Werkstoff Aluminium an Bedeutung gewonnen und wird im Karosseriebau umfänglich eingesetzt. Daher sind auch entsprechende Verfahren zum Schweißen von Aluminiumbolzen auf Aluminiumbleche entwickelt worden.

Der Begriff Bolzen ist im vorliegenden Zusammenhang breit zu verstehen. Hierbei kann es sich um Gewindebolzen, Stifte, Kopfbolzen, T-Bolzen, Stifte mit Innengewinde etc. handeln. Vorliegend soll der Begriff Bolzen jedoch auch andere Werkstücke umfassen, die im Wege des Bolzenschweißverfahrens auf Bleche aufgeschweißt werden, wie beispielsweise Muttern, etc.

Das Bolzenschweißen mit Hubzündung ist beschrieben in dem Merkblatt DVS0902 des Deutschen Verbandes für Schweißtechnik e.V.

Bei den bislang eingesetzten Bolzenschweißverfahren werden Netzteile verwendet, die eine Gleichspannung bereitstellen.

Dabei wird eine - in der Regel dreiphasige - Netzspannung mittels eines Inverters und eines Schweißtransformators mit anschließender Gleichrichtung in eine Versorgungsgleichspannung umgesetzt.

Aus dem Dokument 195 24 490 ist es bekannt, beim Bolzenschweißen mit Hubzündung die Hubhöhe des Schweißbolzens zu regeln. Ferner wird die Polarität des Schweißstromes während des Schweißprozesses mindestens einmal gewechselt, wobei der Schweißstrom für eine vorgegebene Spanne auf einen Minimalwert reduziert oder unterbrochen wird. Hierbei ist zum Wiederzünden des Lichtbogens eine HF-Zündung notwendig.

Das Dokument 199 25 628 offenbart ein Bolzenschweißverfahren mit Hubzündung, wobei in einem ersten Schritt die Oberflächen der Fügezone mittels eines Lichtbogens gereinigt werden. In einem zweiten Schritt erfolgt der eigentliche Schweißprozess, wobei zwischen dem ersten Schritt und dem zweiten Schritt ein Polaritätswechsel erfolgt.

Der Polaritätswechsel erfolgt, wenn der Schweißstrom eine vorbestimmte Zeit ausgeschaltet ist, so dass sich ein lückender Betrieb ergibt.

Es ist auch offenbart, einen einmaligen Polaritätswechsel mit Hilfe von Polaritätswechselmitteln durchzuführen, wozu jedoch zwei separate Energiequellen benötigt werden.

Im Stand der Technik sind andere Lichtbogenschweißverfahren bekannt, bei denen der Schweißprozess eine längere Dauer von mindestens einigen Sekunden bis hin zu Minuten beträgt. Hierbei ist es auch bekannt, Wechselstromquellen zu verwenden.

Um bei einem Polaritätswechsel ein sicheres Zünden bzw. Wiederzünden des Lichtbogens zu gewährleisten, wird entweder eine separate Hochspannungsquelle (Hochfrequenz) verwendet. Alternativ erwärmt man mit einem ersten Schweißgleichstrom die Fügezone so lange, bis beim Stromnulldurchgang des ersten Polaritätswechsels mit relativ kleiner Spannung ein sicheres Zünden des Lichtbogens gegeben ist.

Beispiele für Netzteile und Verfahren zum Erzeugen von Wechselstrom für derartige Lichtbogenschweißprozesse sind beispielsweise bekannt aus den Dokumenten DE 41 28 175, EP 0 547 417, DE 43 30 805 und DE 101 33 715, EP 325 785, EP 1 103 329, EP 1 023 965.

Bei den hier eingesetzten Netzteilen wird generell eine H-Brückenschaltung zur Erzeugung von Wechselströmen verwendet. In vielen Fällen ist eine weitere Energiequelle (Hochspannungsquelle) vorgesehen, um ein Wiederzünden beim Polaritätswechsel zu gewährleisten.

Das Dokument WO 91/01843 offenbart ein Bolzenschweißgerät mit mehreren Schweißausgängen für Schweißpistolen mit verschiedener Polarität für unterschiedliche Schweißaufgaben. Die Polarität wenigstens eines Schweißausganges ist umpolbar.

Das Dokument WO 00/00319 offenbart eine Bolzenschweißeinrichtung mit einem zentralen Bolzenschweißgerät, das einen Schweißausgang und einen Steueranschluß aufweist, mit zumindest einer externen Steuereinheit, die über einen Schweißeingang mit dem Schweißausgang des zentralen Bolzenschweißgerätes und über einen Steueranschluß mit dem Steueranschluß des zentralen Bolzenschweißgerätes verbunden ist und die zumindest einen mit einem Bolzenschweißkopf verbindbaren Schweißausgang aufweist, wobei die externe Steuereinheit zumindest einen steuerbaren Schalter aufweist, der ansteuerbar den Schweißeingang der Steuereinheit mit einem Schweißausgang verbindet.

Aus dem Dokument JP-6-34059 ist ferner eine H-Brückenschaltung bekannt, die zum zeitlich versetzten Ansteuern von mehreren Schweißköpfen genutzt werden kann. Die Schaltung kann ferner ermöglichen, einen jeweiligen Schweißprozess mit Gleichstrom durchzuführen, jedoch die Polarität von Schweißprozess zu Schweißprozess zu wechseln.

Es ist die Aufgabe der vorliegenden Erfindung, ein verbessertes Verfahren zum Erzeugen eines elektrischen Lichtbogenstromes zum Kurzzeit-Lichtbogenbolzenschweißen, ein verbessertes Netzteil zur Durchführung des Verfahrens sowie eine verbesserte Anlage zum Kurzzeit-Lichtbogenbolzenschweißen anzugeben, wobei generell Polaritätswechsel mit sicherem Wiederzünden des Lichtbogens während des Schweißprozesses möglich sein sollen.

Die obige Aufgabe wird gelöst durch ein Verfahren zum Erzeugen eines elektrischen Lichtbogenstromes gemäß Anspruch 1 mit den Schritten:
- Bereitstellen einer Versorgungsgleichspannung;
- Einspeisen der Versorgungsgleichspannung in einen Wechselrichter, der vier steuerbare Schaltelemente aufweist, die zueinander in einer H-Brückenschaltung mit zwei parallelen Längszweigen und einem Querzweig angeordnet sind, wobei eine Lichtbogenstrecke in dem Querzweig angeordnet ist, und
- Ansteuern von jeweils diagonal zueinander angeordneten Schaltelementen, derart, dass in einer ersten Betriebsart ein positiver Lichtbogenstrom bzw. in einer zweiten Betriebsart ein negativer Lichtbogenstrom durch den Querzweig fließt.

Ferner wird die obige Aufgabe gelöst durch ein Netzteil gemäß Anspruch 24.

Schließlich wird die obige Aufgabe gelöst durch eine Anlage zum Kurzzeit-Lichtbogenbolzenschweißen, mit einem Schweißkopf und einer Steuereinheit, wobei die Steuereinheit ein erfindungsgemäßes Netzteil aufweist.

Durch die erfindungsgemäßen Verfahren ist es möglich, die Anwendungsbereiche des Bolzenschweißens auszudehnen. Die metallenen Bauteile in der Kraftfahrzeugindustrie werden immer dünner und häufig mit Oberflächen beschichtet, die vor Korrosion schützen sollen. Auch können die Oberflächen mit anderen Fluiden wie Tiefziehölen behaftet sein. Dies erfolgt auch bei Aluminiumbauteilen.

Das reine Gleichstrom-Bolzenschweißen kann diese Anwendungsfälle häufig nicht mehr abdecken. Durch die erfindungsgemäßen Verfahren können diese Anwendungsgebiete auf Grund des möglichen Polaritätswechsels abgedeckt werden.

Erfindungsgemäß lässt sich ein Netzteil, das zur Durchführung des erfindungsgemäßen Verfahrens ausgelegt ist, für verschiedene Betriebsarten verwenden. Zum einen kann es nach wie vor zum Bereitstellen eines Gleichstromes eingesetzt werden. Alternativ ist es auch möglich, den Schweißprozess in mehrere Abschnitte zu unterteilen, in denen unterschiedliche Polaritäten angelegt werden. Beispielsweise kann ein Wechselstrom zum Reinigen von Bauteil- und Bolzenoberflächen eingesetzt werden, z.B. ohne die Oberflächen anzuschmelzen. In einem unmittelbar darauf folgenden Schweißabschnitt können die Fügeoberflächen z.B. mit Gleichstrom (oder auch mit Wechselstrom) angeschmolzen und dann in einem abschließenden mechanischen Durchdringungsprozess miteinander verbunden werden.

Die erfindungsgemäßen Verfahren können auch auf das einfache und sichere Schweißen von Bolzen mit ringsymmetrischer Fügezone auf dünnwandige Komponenten angewendet werden.

Einzelheiten solcher Verfahren sind in der anhängigen deutschen Patentanmeldung DE 10 2004 056 021.8 offenbart, auf deren Inhalt vollumfänglich Bezug genommen wird.

Schließlich versteht sich, dass die erfindungsgemäßen Verfahren und Netzteile generell zum Erzeugen von elektrischen Lichtbogenströmen verwendbar sind, die auch für andere Anwendungsgebiete als das Kurzzeit-Lichtbogenbolzenschweißen einsetzbar sind, beispielsweise auf kontinuierliche Lichtbogenschweißprozesse.

Erfindungsgemäß wird bei einem Wechsel der Betriebsart Hilfsenergie, die in einem Energiespeicher gespeichert ist, dazu verwendet wird, dass der Lichtbogenstrom nicht lückt und/oder dazu verwendet dass die Steigung des Lichtbogenstromes nicht zu Null wird .

Hierdurch wird es möglich, die verschiedenen Abschnitte des Bolzenschweißprozesses ohne jegliche Unterbrechung im Stromfluss durchzuführen. Das Zünden bzw. Wiederzünden des Lichtbogens zu Beginn des Schweißprozesses und bei Wechseln der Betriebsart (Polaritätswechseln) kann demzufolge sichergestellt werden.

Vorzugsweise ist es daher möglich, auch bei dem kurzen Bolzenschweißprozess mit einer Dauer von beispielsweise 10 ms mindestens einen Polaritätswechsel durchzuführen, ohne dass hierzu Hochspannung verbunden mit Hochfrequenz eingesetzt werden muss, um ein Wiederzünden des Lichtbogens beim ersten Stromnulldurchgang des Schweißstromes z.B. bereits nach 5 ms sicherzustellen.

Die hierzu verwendete Hilfsenergie kann in Energiespeichern wie kapazitiven oder induktiven Energiespeichern aufgebaut werden.

Die bei Polaritätswechseln auftretenden Schaltverluste können in solchen kapazitiven bzw. induktiven Speicherbauelementen aufgefangen werden, um diese Energie dann zur Unterstützung des Wiederzündens des Lichtbogens beim Stromnulldurchgang zu verwenden.

Ferner können die kapazitiven bzw. induktiven Speicherelemente im eingeschwungenen Zustand mit Energie geladen werden, die dann den Grundstock für das Wiederzünden des Lichtbogens beim Stromnulldurchgang bildet.

Vorzugsweise kann somit selbst bei geringen Schweißströmen von etwa 20, 40, 60 oder 80 Ampere ein sicheres Wiederzünden bereits nach einer Prozessdauer (Pulsstromdauer) von beispielsweise 5 ms gewährleistet werden.

Bei dem erfindungsgemäßen Verfahren wird die Hilfsenergie in einem Zwischenkreis gespeichert, der eingangsseitig mit der Versorgungsgleichspannung verbunden ist und der ausgangsseitig mit dem Wechselrichter verbunden ist.

Hierdurch lässt sich die Hilfsenergie schaltungstechnisch effizient speichern.

Es ist vorteilhaft, wenn der Zwischenkreis wenigstens einen Zwischenkreiskondensator aufweist, in dem Hilfsenergie gespeichert wird.

Kondensatoren sind preisgünstige Energiespeicher und eignen sich besonders zur kurzfristigen Aufnahme von Hilfsenergie.

Erfindungsgemäß weist der Zwischenkreis wenigstens einen ersten Zwischenkreisschalter auf, der so angesteuert wird, dass die Hilfsenergie bei einem Wechsel der Betriebsart zur Verfügung gestellt wird.

Bei dieser Ausführungsform kann die Hilfsenergie gezielt und zeitlich abgestimmt bereitgestellt werden, indem der erste Zwischenkreisschalter geeignet angesteuert wird.

Gemäß einer weiteren bevorzugten Ausführungsform weist der Zwischenkreis einen ersten Zwischenkreislängszweig auf, der einen Zwischenkreiskondensator, in dem Hilfsenergie gespeichert wird, und wenigstens eine Zwischenkreisdiode aufweist.

Durch diese Maßnahme kann gewährleistet werden, dass der Kondensator geeignet aufgeladen werden kann. Ferner kann der Zwischenkreiskondensator mittels der Zwischenkreisdiode entkoppelt werden, derart, dass die Versorgungsgleichspannung einfacher geregelt werden kann.

Bei dem des erfindungsgemäßen Verfahren ist es bevorzugt, wenn der erste Zwischenkreislängszweig parallel zu der Versorgungsgleichspannung angeschlossen ist.

Hierdurch ergibt sich ein einfacher Schaltungsaufbau.

Ferner ist es bei der vorliegenden Erfindung vorteilhaft, wenn der Zwischenkreis einen zweiten Zwischenkreislängszweig aufweist, der parallel zu der Versorgungsgleichspannung angeschlossen ist und wenigstens einen ersten Zwischenkreisschalter aufweist, der so angesteuert wird, dass Hilfsenergie des Zwischenkreises bei Bedarf zur Verfügung gestellt wird.

Durch diese Maßnahme kann der Zwischenkreiskondensator geeignet aufgeladen und zeitlich optimal entladen werden, um die Hilfsenergie des Zwischenkreises bei Bedarf (insbesondere bei einem Polaritätswechsel) zur Verfügung zu stellen.

Dabei ist es von besonderem Vorteil, wenn die Hilfsenergie bei Bedarf über wenigstens einen Widerstand bereitgestellt wird.

Hierdurch kann der Strom der Hilfsenergie begrenzt werden.

Ferner ist es vorteilhaft, wenn der zweite Zwischenkreislängszweig wenigstens einen zweiten Zwischenkreisschalter aufweist, der seriell mit dem ersten Zwischenkreisschalter verbunden ist und so angesteuert wird, dass der Zwischenkreiskondensator während des Betriebs in einer Betriebsart zumindest teilweise entladen wird.

Durch diese Maßnahme kann gewährleistet werden, dass der Zwischenkreiskondensator vor einem Polaritätswechsel hinreichend entladen ist, um die bei einem Polaritätswechsel auf Grund von Schaltvorgängen auftretenden Überspannungen aufzunehmen. Diese können dann in Form der Hilfsenergie gespeichert und später verwertet werden, um das Wiederzünden des Lichtbogens zu unterstützen.

Dabei ist es von besonderem Vorteil, wenn der Zwischenkreiskondensator unmittelbar nach dem Ende eines Schweißprozesses vollständig entladen wird.

Von besonderem Vorteil ist es ferner, wenn der Zwischenkreiskondensator über einen Widerstand entladen wird.

Hierdurch wird der Entladestrom begrenzt.

Bei den Ausführungsformen mit zwei Zwischenkreislängszweigen ist es von besonderem Vorteil, wenn der Zwischenkreis ferner einen Zwischenkreisquerzweig aufweist, der den ersten und den zweiten Zwischenkreislängszweig miteinander verbindet.

Hierdurch lassen sich die Funktionen des Zwischenkreises schaltungstechnisch besonders günstig realisieren.

Bei dem erfindungsgemäßen Verfahren ist es besonders bevorzugt, wenn der Zwischenkreisquerzweig zwischen dem ersten und dem zweiten Zwischenkreisschalter angeschlossen ist.

Durch diese Maßnahme kann der Zwischenkreisquerzweig sowohl zum "Aufladen" als auch zum "Entladen" des Zwischenkreiskondensators verwendet werden.

Insgesamt ist es bei dem erfindungsgemäßen Verfahren vorteilhaft, wenn parallel zu den Längszweigen der H-Brückenschaltung eine C-Snubber-Schaltung angeordnet ist, die dazu dient, Überspannungsspitzen bei Ausschalten von zuvor eingeschalteten Schaltelementen zu unterdrücken, und ferner dazu dient, bei einem Wechsel der Betriebsart durch darin gespeicherte Hilfsenergie beginnend mit dem Nulldurchgang des Lichtbogenstromes die Steigung des Lichtbogenstromes zu vergrößern, um das Wiederzünden des Lichtbogens im Nulldurchgang zu unterstützen.

Die C-Snubber-Schaltung kann als alleiniges Mittel zum Wiederzünden des Lichtbogens im Nulldurchgang verwendet werden, oder zusätzlich zu dem vorteilhaften Verfahren, bei dem Hilfsenergie in einem Zwischenkreis gespeichert wird.

Eine C-Snubber-Schaltung kann generell auch bei dem zweiten Aspekt des erfindungsgemäßen Verfahrens verwendet werden.

Bei dem erfindungsgemäßen Verfahren ist es insgesamt vorteilhaft, wenn parallel zu jedem der vier Schaltelemente eine Snubber-Schaltung angeordnet ist, wobei die Snubber-Schaltungen dazu dienen, Überspannungsspitzen beim Ausschalten von zuvor eingeschalteten Schaltelementen zu unterdrücken, und ferner dazu dient, bei einem Wechsel der Betriebsart durch darin gespeicherte Hilfsenergie beginnend mit dem Nulldurchgang des Lichtbogenstromes die Steigung des Lichtbogenstromes zu vergrößern, um das Wiederzünden des Lichtbogens im Nulldurchgang zu unterstützen.

Die Maßnahme, über den Schaltelementen jeweils eine eigene Snubber-Schaltung anzuordnen, kann entweder unabhängig von der C-Snubber-Schaltung und dem Zwischenkreis als Maßnahme zum Wiederzünden des Lichtbogens im Nulldurchgang verwendet werden. Alternativ hierzu werden die Snubber-Schaltungen über den Schaltelementen zusätzlich zu anderen Mitteln verwendet, die zum Wiederzünden des Lichtbogens dienen.

Von besonderem Vorteil ist es, wenn die Snubber-Schaltungen jeweils als RCD-Snubber-Schaltungen ausgebildet sind und einen Kondensator zur Zwischenspeicherung von Hilfsenergie aufweisen.

Bei dem erfindungsgemäßen Verfahren ist es insgesamt vorteilhaft, wenn die Schaltelemente bei einem Wechsel der Betriebsart so geschaltet werden, dass das Einschalten der zuvor ausgeschalteten Schaltelemente entweder zeitgleich oder kurz verzögert zu dem Ausschalten der zuvor eingeschalteten Schaltelemente erfolgt.

Hierdurch ist es einfach möglich, Hilfsenergie zu speichern und nach dem Einschalten der zuvor ausgeschalteten Schaltelemente zum Wiederzünden des Lichtbogens zu verwenden.

Ferner ist es insgesamt vorteilhaft, wenn die Schaltelemente bei einem Wechsel der Betriebsart so geschaltet werden, dass das Einschalten der zuvor ausgeschalteten Schaltelemente vor dem Nulldurchgang des Lichtbogenstromes erfolgt.

Auch hierbei ist vorteilhaft, dass die Hilfsenergie vor dem Nulldurchgang bereitgestellt werden kann, so dass vermieden werden kann, dass die Steigung des Lichtbogenstromes im Nulldurchgang Null wird. Diese Maßnahme trägt insofern dazu bei, dass ein lückender Betrieb vermieden wird.

Bei dem erfindungsgemäßen Verfahren ist es vorgesehen dass eine Mehrzahl von Wechselrichtern an die Versorgungsgleichspannung angeschlossen ist.

Hierdurch ist es möglich, die Versorgungsspannung zum Betrieb einer Mehrzahl von Schweißprozessen, insbesondere zum Betrieb einer Mehrzahl von Schweißköpfen, zu verwenden.

Von besonderem Vorteil ist es dabei, wenn die Anzahl n der Wechselrichter im Bereich von 2 bis 5 liegt.

Ferner ist es erfindungsgemäß vorgesehen, dass bei der Mehrzahl von Wechselrichtern diese zeitlich versetzt angesteuert werden, um eine entsprechende Mehrzahl von Schweißprozessen zeitlich versetzt durchführen zu können.

Insgesamt kann so ein Netzteil verwendet werden, um mehrere Schweißprozesse zu steuern. Durch eine geeignete Ablaufsteuerung werden diese zeitlich hintereinander durchgeführt, so dass das erfindungsgemäß arbeitende Netzteil von der Leistungsaufnahme her im Wesentlichen für das Durchführen jeweils eines Schweißprozesses zur Zeit dimensioniert werden kann.

Bei dem erfindungsgemäßen Verfahren ist es vorteilhaft, wenn ein erster Wechselrichter eine H-Brückenschaltung mit vier steuerbaren Schaltelementen aufweist und wenn für jeden weiteren Wechselrichter ein Wechselrichterzweig mit zwei in Reihe geschalteten Schaltelementen vorgesehen ist.

Durch diese Maßnahme kann die Anzahl der Schaltelemente bei einer Mehrzahl von zu steuernden Schweißprozessen deutlich verringert werden.

Insgesamt ist es ferner vorteilhaft, wenn die Stärke des Lichtbogenstromes für aufeinanderfolgende Teilabschnitte eines Schweißprozesses individuell einstellbar ist.

Durch diese Maßnahme kann der Schweißprozess insgesamt optimiert werden.

Ferner ist es bevorzugt, wenn die Dauer des Lichtbogenstromes für aufeinanderfolgende Teilabschnitte eines Schweißprozesses individuell einstellbar ist.

Auch diese Maßnahme trägt dazu bei, dass der Schweißprozess insgesamt optimierbar ist.

Gleiches gilt für eine weitere bevorzugte Maßnahme, wonach der Lichtbogenstrom für die erste und die zweite Betriebsart getrennt einstellbar ist.

Hierdurch ist es möglich, für jede Polarität eine unterschiedliche Stärke und/oder unterschiedliche Dauer des Lichtbogenstromes einzustellen.

Ferner ist es vorteilhaft, wenn die Frequenz des Wechsels der Betriebsart im Bereich zwischen 0 Hz und 500 Hz einstellbar ist.

Hierdurch kann ein breites Spektrum an Anwendungsfällen abgedeckt werden.

Bei dem ersten Aspekt des erfindungsgemäßen Verfahrens ist es ferner vorteilhaft, wenn die Versorgungsgleichspannung mittels eines Inverters und eines Transformators und einer anschließenden Gleichrichtung bereitgestellt wird.

Insgesamt wird erfindungsgemäß wenigstens eines der folgenden Merkmale bzw. einer der folgenden Vorteile realisiert:

Die Stromstärke und die Stromflussdauer des Lichtbogenstromes sind für die positive und die negative Polarität getrennt voneinander und individuell einstellbar, insbesondere, um die Oberflächen in der Fügezone gleichermaßen mit Wärme beaufschlagen zu können.

Die Stromstärke und die Stromflussdauer des Lichtbogenstromes sind für mehrere Abschnitte des Bolzenschweißprozesses, mindestens 1 bis 5, getrennt voneinander und individuell einstellbar, um z.B. den Lichtbogen zu zünden, die Oberflächen in einem CleanFlash-Prozess (Reinigungsprozess) zu reinigen, z.B. ohne sie anzuschmelzen, um die Oberflächen in einem darauf folgenden Schweißprozess anzuschmelzen, und um sie anschließend einander durchdringen zu lassen.

Die Stromstärke des Lichtbogenstromes ist in kleinen Schritten von mindestens 0,1 A im Bereich von vorzugsweise 20 A - 2000 A einstellbar.

Die Frequenz des Lichtbogenstromes ist vorzugsweise im Bereich von 0 Hz bis 1000 Hz einstellbar, besonders bevorzugt von 0 Hz bis 500 Hz.

Der erste Impuls eines ersten Wechselstromabschnittes des Lichtbogenstromes beträgt in Abhängigkeit von der Polarität, der Oberflächenbeschaffenheit und dem Werkstoff von Bolzen und Werkstück mindestens 5 ms bis 50 ms.

Die Stromflussdauer der Polaritäten und der negativen Lichtbogenströme ist von 0 % bis 100 % bzw. 100 % bis 0 % einstellbar, um die Oberflächen in der Fügezone gleichermaßen mit Wärme beaufschlagen zu können. Mit anderen Worten ist das Tastverhältnis des Lichtbogenstromes einstellbar.

Die Hubhöhe des Bolzens ist für jeden der Prozessabschnitte getrennt voneinander und individuell einstellbar, und zwar vorzugsweise getrennt für jede Polarität des Lichtbogenstromes.

Vorzugsweise erfolgt eine Messung der Lichtbogenspannung und der Vergleich von Messwerten mit vorgegebenen Referenzspannungswerten, um die Hubhöhe des Bolzens von Pulsstrom zu Pulsstrom gleicher und/oder ungleicher Polarität so zu verändern, dass sich bei gleichbleibendem Lichtbogenstrom eine bestimmte Lichtbogenspannung einstellt. Alternativ kann die Messung der Lichtbogenspannung dazu verwendet werden, die Übergänge von einem zum nächsten Prozessabschnitt zu steuern. Hierdurch kann der zeitliche Ablauf des Bolzenschweißprozesses zeitlich geregelt in Abhängigkeit von der Lichtbogenspannung erfolgen.

Insgesamt sind Bolzenschweißprozesse möglich, bei denen in einer Vorstromphase der Lichtbogenstrom zum anfänglichen Zünden des Lichtbogens als Gleichstrom ausgebildet ist. Im Anschluss hieran kann sich ggf. in Abhängigkeit vom Oberflächenzustand der Bauteile ein Schweißprozess anschließen (wenn der Oberflächenzustand rein ist) oder ein Reinigungsprozess anschließen, an den wiederum sich der Schweißprozess anschließt.

Wie erwähnt, können die Übergänge zwischen den einzelnen Abschnitten zeitlich gesteuert oder getriggert über die Lichtbogenspannung erfolgen.

Die Schaltelemente können insbesondere als IGBTs ausgebildet sein, können jedoch auch durch andere Arten von Schaltelementen gebildet sein.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Ansicht einer erfindungsgemäßen Bolzenschweißanlage;
- Fig. 2: ein schematisches Blockschaltbild eines erfindungsgemäßen Netzteiles für eine Steuereinrichtung der Bolzenschweißanlage der Fig. 1;
- Fig. 3: ein detailliertes Schaltungsdiagramm des Netzteils der Fig. 2;
- Fig. 4: eine Darstellung einer RCD-Snubber-Schaltung für die Schaltelemente des Netzteiles der Fig. 3;
- Fig. 5: ein Diagramm von Lichtbogenstrom über der Zeit für einen beispielhaften Bolzenschweißprozess;
- Fig. 6: eine Teilansicht des Schaltungsdiagrammes der Fig. 3 in einem Zustand "Z1";
- Fig. 7: eine der Fig. 6 vergleichbare Darstellung in einem Zustand "Z2";
- Fig. 8: eine der Fig. 6 vergleichbare Darstellung in einem Zustand "Z3";
- Fig. 9: eine der Fig. 6 vergleichbare Darstellung in einem Zustand "Z4";
- Fig. 10: prinzipielle Zeitablaufdiagramme von Zwischenkreiskondensatorspannung U_{CSZK}, Zwischenkreiskondensatorstrom I_{CSZK} sowie der für den Polaritätswechsel notwendigen Schaltimpulse der Schaltelemente des Netzteils;
- Fig. 11: prinzipielle Zeitablaufdiagramme von Strom I₄₁ₐ und Spannungsverlauf U₄₀ unmittelbar am Eingang des Ausgangswechselrichters sowie der für den Polaritätswechsel notwendigen Schaltimpulse der Schaltelemente des Netzteils;
- Fig. 12: ein vereinfachtes Schaltungsdiagramm einer nicht erfindungsgemäßen Ausführungsform eines Netzteiles für die Steuervorrichtung der Fig. 1;
- Fig. 13: ein Schaltungsdiagramm einer weiteren nicht erfindungsgemäßen Ausführungsform eines Netzteiles für die Steuervorrichtung der Fig. 1; und
- Fig. 14: eine schematische Darstellung einer Halbbrückenschaltung zur Ergänzung der H-Brückenschaltung des Netzteiles der Fig. 3.

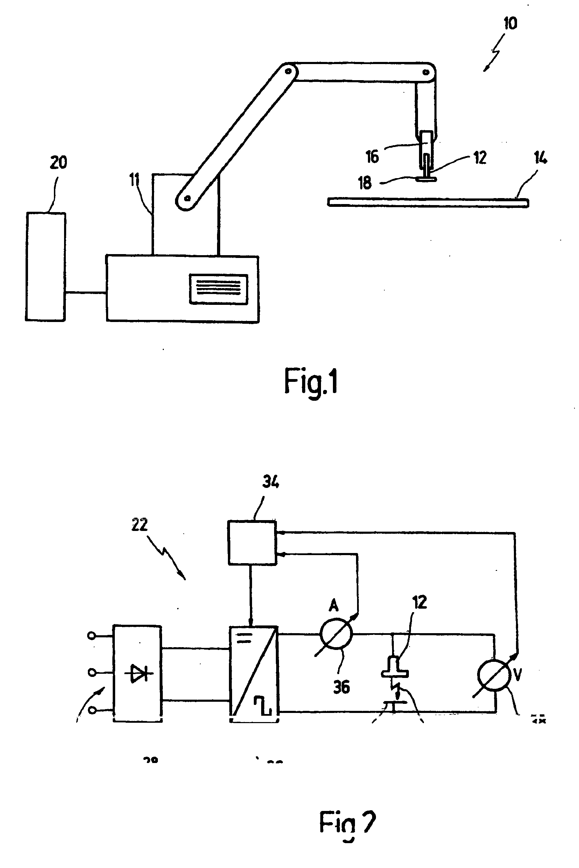

In Fig. 1 ist eine bevorzugte Ausführungsform einer erfindungsgemäßen Bolzenschweißanlage generell mit 10 bezeichnet.

Die Bolzenschweißanlage 10 weist einen Roboter, vorzugsweise einen Knickarmroboter 11, auf, mittels dessen ein metallener Bolzen 12 auf ein Werkstück wie ein Metallblech 14 aufgeschweißt werden.

Der Bolzen 12 und das Werkstück 14 können aus Stahl oder Aluminium sein, beschichtet oder unbeschichtet bzw. gereinigt oder ungereinigt.

Der Roboter 11 weist an seinem äußersten Arm einen Schweißkopf 16 auf. Der Schweißkopf 16 dient dazu, einen Bolzen 12 zu halten und dem Schweißprozess die notwendige Leistung und Steuersignale zuzuführen. Ferner kann in dem Schweißkopf 16 eine automatisierte Zuführung für Bolzen 12 integriert sein.

In Fig. 1 ist der Bolzen 12 mit einem Flansch 18 dargestellt. Es versteht sich jedoch, dass der Begriff Bolzen allgemein zu verstehen ist und hierunter jedes Teil verstanden werden soll, das im Bolzenschweißverfahren auf ein Werkstück aufschweißbar ist.

Bei 20 ist eine Steuereinheit dargestellt, die dazu dient, dem Schweißkopf 16 die für den Schweißprozess notwendige Leistung und die notwendigen Steuersignale bereitzustellen.

Die Steuereinheit 20 weist ein Netzteil 22 auf, das dazu dient, einen elektrischen Prozessstrom zu erzeugen, wobei der elektrische Prozessstrom in erster Linie für den eigentlichen Schweißprozess verwendet wird, jedoch auch für vor- oder nachgeschaltete Prozesse wie Reinigungsvorgänge ("CleanFlash") verwendbar ist.

Das Netzteil 22 ist dazu in der Lage, einen Wechselstrom in einem Frequenzbereich von 0 Hz bis 500 Hz bereitzustellen. Die Stromstärke kann im Bereich von 20 A bis 2000 A liegen, um ein Beispiel zu nennen.

Das Netzteil 22 ist somit dazu in der Lage, einen Gleichstrom bereitzustellen (0 Hz) oder einen Wechselstrom. Das Netzteil 22 ist in vieler Hinsicht einstellbar, beispielsweise hinsichtlich der Stromstärke, und zwar getrennt für jede Polarität, und ferner hinsichtlich der Zeitdauer von Stromimpulsen einer Polarität, ebenfalls getrennt für jede Polarität. Somit ist auch das Tastverhältnis einstellbar.

Die Bolzenschweißanlage 10 ist dazu ausgelegt, einen Bolzenschweißprozess mit Hubzündung durchzuführen. Hierbei wird in an sich bekannter Weise der Bolzen 12 zunächst auf das Werkstück 14 aufgesetzt und dann wird ein Pilotstrom erzeugt, der in der Regel geringer ist als der Schweißstrom. Anschließend wird der Bolzen 12 von dem Werkstück 14 abgehoben, so dass ein Lichtbogen gezogen wird. Im Anschluss daran kann dann, wenn die Oberflächen von Bolzen 12 und/oder Werkstück 14 rein sind, unmittelbar der eigentliche Schweißprozess folgen, wobei der Lichtbogenstrom so erhöht wird, dass die einander gegenüberliegenden Fügeflächen von Bolzen 12 und Werkstück 14 anschmelzen. Anschließend wird der Bolzen 12 auf das Werkstück 14 abgesenkt, so dass sich die Schmelzen durchmischen, wobei Bolzen 12 und Werkstück 14 gegeneinander gepresst werden, und der Schweißstrom wird abgeschaltet. Im Anschluss hieran kühlt die Gesamtschmelze ab und der Bolzen ist stoffschlüssig mit dem Werkstück 14 verbunden.

Die typische Zeitdauer eines solchen Schweißprozesses liegt im Bereich von 10 ms bis 100 ms, wobei dies in der Regel nicht die Zeit eines vorgeschalteten Reinigungsprozesses beinhaltet.

In Fig. 2 ist in schematischer Form eine erste Ausführungsform eines Netzteiles 22 der Steuereinheit 20 der Fig. 1 dargestellt.

Das Netzteil 22 weist einen Eingang 26 für eine Versorgungsspannung, in der Regel eine dreiphasige Netzspannung (z.B. 400 Vac) auf.

Ferner beinhaltet das Netzteil 22 einen ersten Gleichrichter 28 und einen Wechselrichter 30, an dessen Ausgang der Prozessstrom bereitgestellt wird.

Genauer gesagt fließt der Prozessstrom über einen Lichtbogen einer Lichtbogenstrecke 32 zwischen dem Bolzen 12 und dem Werkstück 14.

Eine Ansteuerschaltung 34 ist vorgesehen, um den Wechselrichter 30 geeignet anzusteuern.

Ferner ist ein Sensor zum Messen des Lichtbogenstromes 36 sowie ein Sensor zum Messen der Lichtbogenspannung 38 vorgesehen.

Die Messwerte von Lichtbogenstrom 36 und Lichtbogenspannung 38 werden der Ansteuerschaltung 34 zugeführt, die auf der Grundlage der aktuellen Messwerte den Prozessstrom und/oder den Prozessablauf regelt.

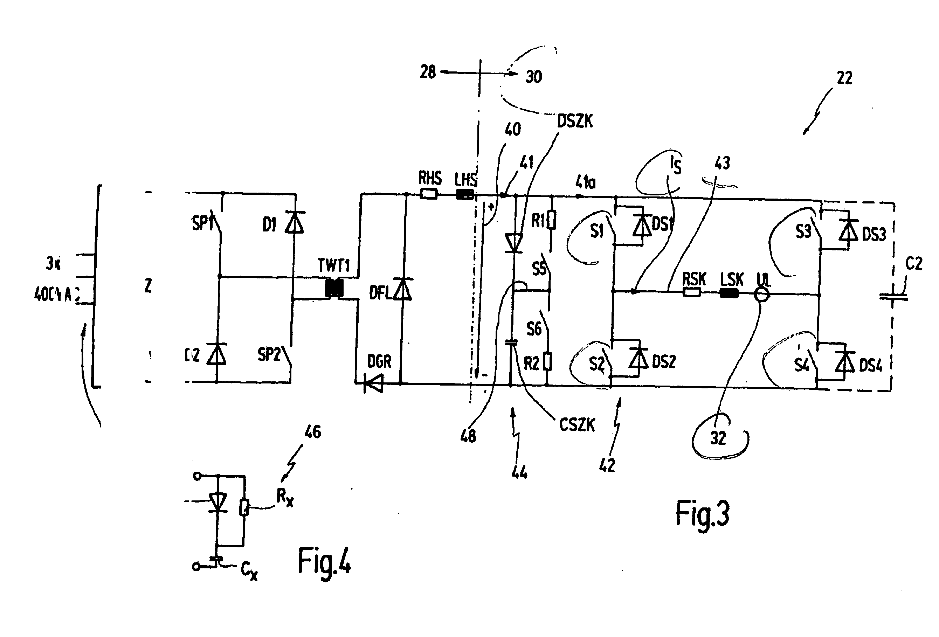

In Fig. 3 ist ein Schaltungsdiagramm einer ersten Ausführungsform eines erfindungsgemäßen Netzteiles dargestellt.

Das Netzteil 22 weist auf der Gleichrichterseite 28 ein Schaltnetzteil zur Erzeugung eines auf Konstantstromverhalten hin geregelten Prozesstromes auf. Ein derartiges Schaltnetzteil zur Bereitstellung eines Gleichstromes ist allgemein bekannt und beinhaltet zunächst einen Gleichrichterabschnitt, dessen Eingang 26 mit der Versorgungsspannung verbunden ist, sowie einen Inverter und einen Transformator TWT1. An der Sekundärseite des Transformators TWT1 ist eine Gleichrichtungsschaltung vorgesehen, an deren Ausgang eine Versorgungsgleichspannung 40 bzw. ein Prozessgleichstrom 41 bereitgestellt werden.

In dem sekundärseitigen Gleichrichtungszweig ist eine Induktivität LHS zur Glättung des Prozessgleichstromes 41 vorgesehen.

Die Wechselrichterseite 30 des Netzteiles 22 beinhaltet eine H-Brückenschaltung 42 mit zwei parallelen Längszweigen, die an die Versorgungsgleichspannung 40 angeschlossen sind, und einem Querzweig 43, der einen Schweißkreis bildet.

Die H-Brückenschaltung 42 weist in den Längszweigen in an sich bekannter Weise vier Schaltelemente in Form beispielsweise von IGBT-Transistoren S1-S4 auf. Über diesen können jeweils in an sich bekannter Weise Freilaufdioden DS1-DS4 angeschlossen sein.

Der Querzweig 43 verbindet einen Knoten zwischen zwei Schaltern S1, S2 mit einem Knoten zwischen zwei Schaltern S3, S4 in den zwei Längszweigen. Der Querzweig 43 weist eine Lichtbogenstrecke UL bzw. 32 und einen Schweißkreiswiderstand RSK und eine Schweißkreisinduktivität LSK auf.

In dem Querzweig 43 fließt ein Schweißstrom Iₛ.

Die vier Schaltelemente S1-S4 werden jeweils diagonal angesteuert, so dass der Schweißstrom Iₛ gebildet ist im Wesentlichen durch den Prozessstrom 41, der durch den Schalter S1, den Querzweig 43 und den Schalter S4 fließt. Diese Stromrichtung entspricht einer ersten Betriebsart. In einer zweiten Betriebsart sind die zwei anderen Schaltelemente S3, S2 geschlossen, so dass der Schweißstrom Iₛ in der entgegengesetzten Richtung durch den Querzweig 43 fließt.

Zwischen dem Eingang des Wechselrichters 30 und der H-Brückenschaltung 42 ist ein Zwischenkreis 44 angeschlossen.

Der Zwischenkreis 44 weist zwei Längszweige auf. Ein erster Längszweig beinhaltet einen Zwischenkreiskondensator CSZK, der über eine Diode DSZK vom Hauptkreis entkoppelt ist. Der Zwischenkreis 44 beinhaltet einen zweiten Längskreis, der zu dem ersten Längskreis parallel an die Versorgungsgleichspannung 40 angeschlossen ist. Der zweite Längskreis weist einen ersten Zwischenkreisschalter S5 und einen zweiten Zwischenkreisschalter S6 auf.

Der Zwischenkreisquerzweig 48 ist auf der Seite des ersten Längszweiges zwischen dem Zwischenkreiskondensator CSZK und der Entkoppelungsdiode DSZK angeschlossen. Auf der Seite des anderen Längszweiges ist der Zwischenkreisquerzweig zwischen den zwei Schaltern S5, S6 angeschlossen.

Der erste Zwischenkreisschalter S5 ist seriell mit einem ersten Widerstand R1 verbunden. Der zweite Zwischenkreisschalter S6 ist seriell mit einem zweiten Widerstand R2 verbunden.

Der Zwischenkreis 44, insbesondere der Energiespeicher des Zwischenkreises in Form des Zwischenkreiskondensators CSZK dient dazu, bei einem Polaritätswechsel zwischen den zwei Betriebsarten des Netzteiles 22 Hilfsenergie zunächst aufzunehmen und zwischenzuspeichern und anschließend gesteuert über den ersten Zwischenkreisschalter S5 abzugeben, um die Steigung dIₛ/dt des Schweißstromes Iₛ beginnend mit seinem Stromnulldurchgang zu erhöhen und damit ein sicheres Zünden eines beim Stromnulldurchgang erloschenen Lichtbogens 32 zu gewährleisten.

Der Kondensator CSZK kann ferner dazu dienen, eine gesteuerte Ladung aufzunehmen, um bei Beginn eines ersten Abschnittes eines Bolzenschweißprozesses beim Abheben des Bolzens von dem Werkstück ein erstes Zünden des Lichtbogens sicherzustellen.

Über den Schalter S6 kann eine Zwangsentladung der in dem Kondensator CSZK verbleibenden Energie erfolgen, und zwar unmittelbar nach einem Schweißprozess bzw. nach dem Ausschalten des Gerätes, um z.B. im Falle eines fehlerhaft durchgeschalteten aktiven Schaltelementes (S1-S4) ein Auftreten der Zwischenkreisspannung an offenen, berührbaren Komponenten des Schweißkopfes zu verhindern.

Anstelle des Zwischenkreises 44 oder zusätzlich hierzu kann parallel zu der Versorgungsspannung 40 eine C-Snubber-Schaltung C2 vorgesehen sein, die dazu dient, Überspannungsspitzen beim Ausschalten von aktiven Schaltelementen S1-S4 zu unterdrücken und um die Steigung dIₛ/dt des Schweißstromes beginnend mit seinem Stromnulldurchgang zu erhöhen und damit ein sicheres Zünden des beim Stromnulldurchgang erloschenen Lichtbogens sicherzustellen.

In Fig. 4 sind weitere Mittel dargestellt, um dies zu erreichen. Fig. 4 zeigt eine RCD-Snubber-Schaltung mit einem Kondensator Cₓ und einer seriell hiermit verbundenen Diode Dₓ. Parallel zu der Diode Dₓ ist ferner ein Widerstand Rₓ angeschlossen.

Die drei Mittel zum Unterdrücken von Überspannungsspitzen und/oder zum Sicherstellen eines Wiederzündens des Lichtbogens, nämlich der Zwischenkreis 44 mit dem Zwischenkreiskondensator CSZK, die C-Snubber-Schaltung C2 bzw. vier RCD-Snubber-Schaltungen 46 über den Schaltelementen S1-S4, können jeweils für sich oder in einer beliebigen Kombination hiervon verwendet werden.

Von besonderem Vorteil ist es, dass mit diesen Mitteln erreicht werden kann, dass ein Polaritätswechsel (ein Betriebsartenwechsel) stattfinden kann, ohne dass es hierbei während des Stromnulldurchganges zu einem Lücken des Schweißstromes kommt. Insbesondere kann vermieden werden, dass die Steigung dIₛ/dt während des Polaritätswechsels zu Null wird.

Insgesamt kann erreicht werden, dass die verschiedenen Abschnitte eines Bolzenschweißprozesses ohne jegliche Unterbrechung im Stromfluss stattfinden können. Insgesamt können die Bolzenschweißprozesse dadurch in wesentlich kürzerer Zeit erfolgen. Ferner können auf Grund der Variabilität des Netzteiles 22 im Hinblick auf Frequenz und Einstellbarkeit von Stromstärke und Stromtastverhältnis neue Anwendungsgebiete erschlossen werden, insbesondere bislang als besonders schwierig erachtete Anwendungsgebiete, die das Bolzenschweißen mit Aluminium und ggf. verunreinigten oder beschichteten Oberflächen beinhaltet.

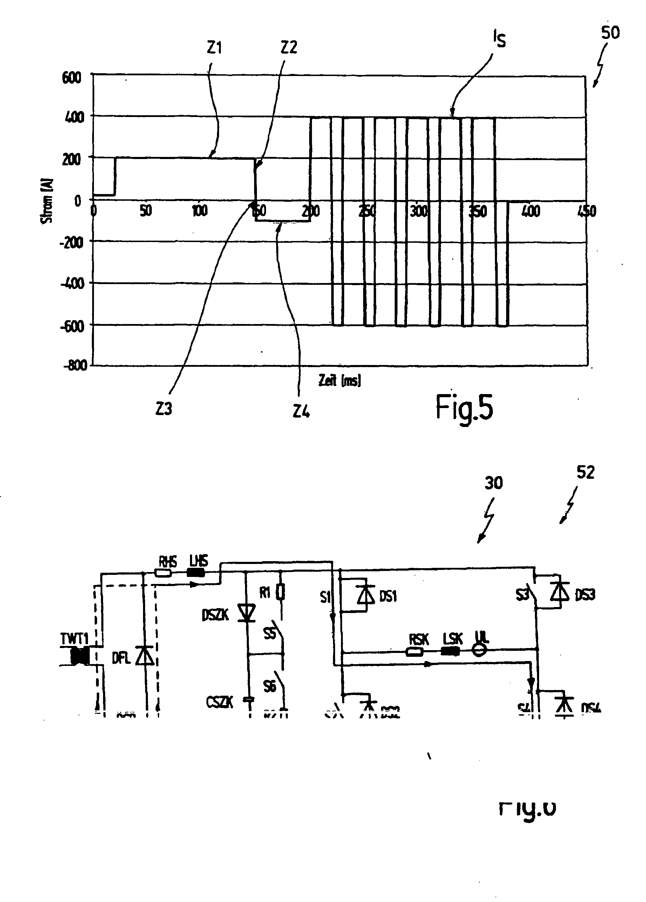

In Fig. 5 ist in schematischer Form ein beispielhafter Verlauf des Schweißstromes Iₛ über der Zeit dargestellt.

Nach einem Einschalten des Schweißstromes Iₛ wird der Schweißstrom in einem ersten Zustand Z1 auf einem konstanten positiven Wert von 200 A gehalten. Zu einem Zeitpunkt Z2 erfolgt ein Umschalten der Polarität. Bei Z3 erfolgt der Nulldurchgang des Schweißstromes Iₛ. Im Anschluss hieran erfolgt wiederum eine Phase konstanten negativen Schweißstromes Iₛ, mit einem Wert von etwa -80 A (Zustand Z4).

Im Anschluss daran erfolgt ein Wechselstrom im Bereich zwischen +400 und -600 A, wobei der Schweißstrom Iₛ bei positiver Polarität länger eingeschaltet bleibt als bei negativer Polarität.

In Fig. 6 ist der Wechselrichterabschnitt 30 des Netzteiles 22 während des Zustandes Z1 dargestellt. Es ist zu erkennen, dass die Schalter S5, S6 sowie die Schalter S2, S3 geöffnet sind und folglich der Schweißstrom Iₛ über die Schalter S1, S4 und den Querzweig fließt.

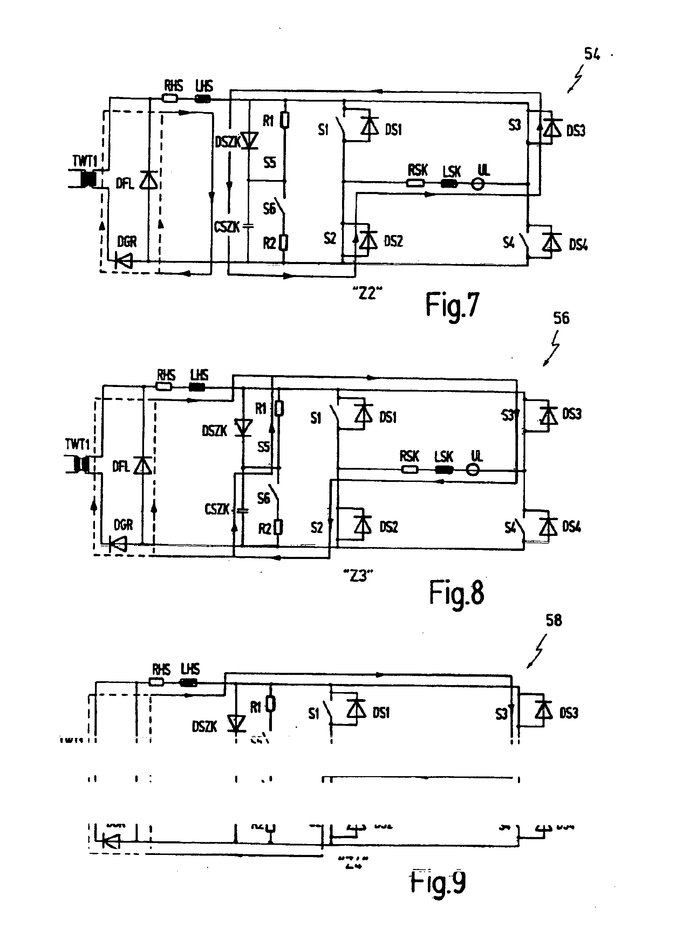

Fig. 7 zeigt eine entsprechende Darstellung in dem Zustand "Z2". Die Schalter S1, S4 sind geöffnet und die Schalter S3, S2 geschlossen worden. Ferner ist der Schalter S5 entweder noch geöffnet oder geschlossen, wie in Fig. 7 dargestellt.

Die Stromrichtung in dem Querzweig ist dabei die gleiche wie in dem Zustand "Z1", und zwar im Wesentlichen auf Grund der Induktivität LSK. Wenn die darin gespeicherte Energie abgebaut ist, dreht sich die Stromrichtung in dem Querzweig um. Bei dem geschlossenen Schalter S5 entlädt sich nunmehr der Zwischenkreiskondensator CSZK über den Schalter S5 und den Widerstand R1. Die darin gespeicherte Hilfsenergie trägt dazu bei, dass der Lichtbogenstrom (Schweißstrom Iₛ) in dem Querzweig 43 nicht lückt bzw. dessen Steigung nicht zu Null wird (Zustand "Z3, Fig. 8).

In Fig. 9 ist der Zustand "Z4" gezeigt, bei dem konstant ein Strom negativer Polarität fließt.

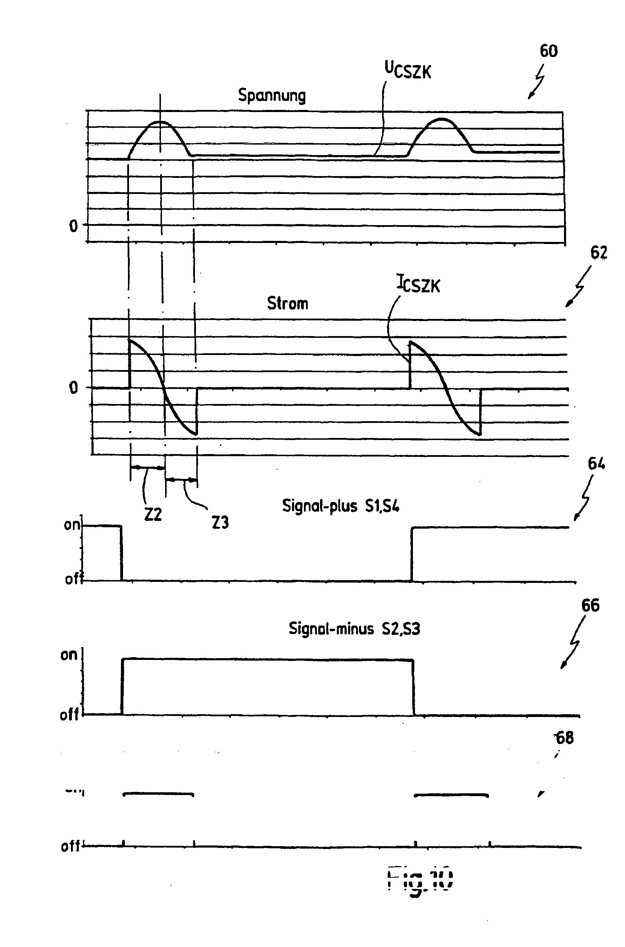

Fig. 10 zeigt die prinzipiellen Zeitablaufdiagramme am Zwischenkreiskondensator, wobei Diagrammform 60 die Kondensatorspannung U_{CSZK} über der Zeit zeigt, wobei Diagrammform 62 den Kondensatorstrom I_{CSZK} über der Zeit zeigt, wobei Diagramm 64 den on-off Zustand der Schalter S1, S4 zeigt, wobei Diagramm 66 den on-off Zustand der Schalter S2, S3 zeigt und wobei Diagramm 68 den on-off Zustand des Schalters S5 zeigt.

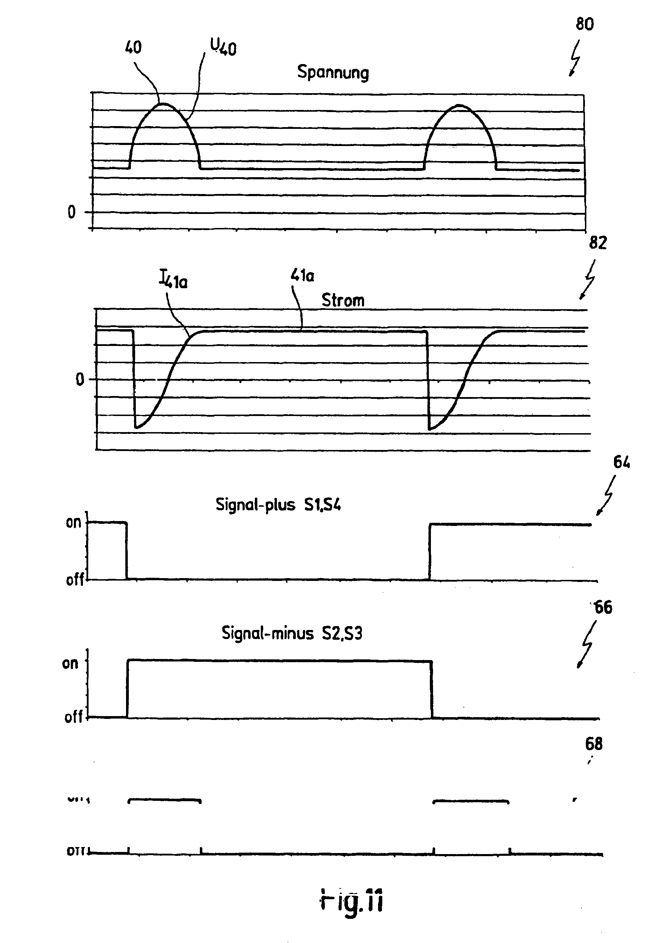

Fig. 11 zeigt die prinzipiellen Zeitablaufdiagramme von Strom 41a und Spannung 40 unmittelbar am Eingang des Ausgangswechselrichters, wobei wiederum die zugehörigen Schaltzustände der Schalter S1 bis S5 dargestellt sind.

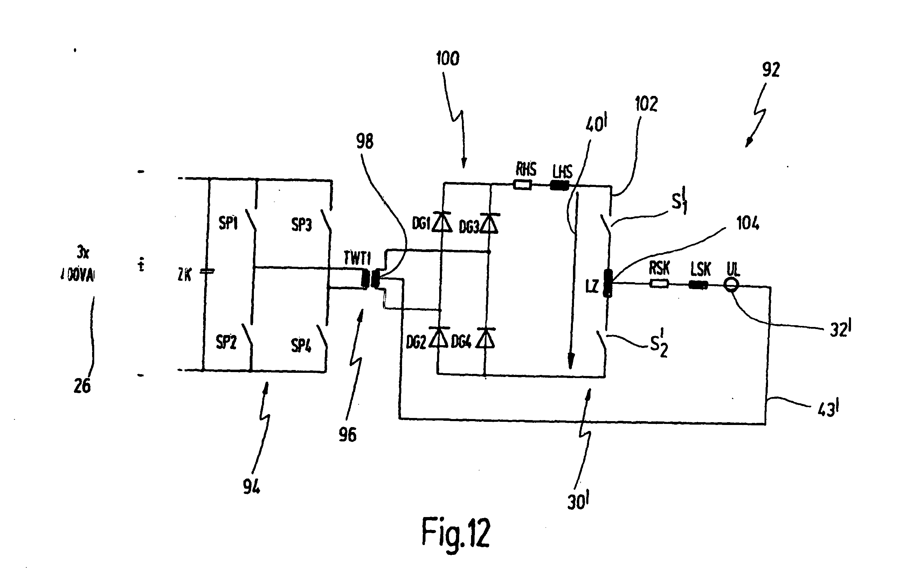

Fig. 12 zeigt ein vereinfachtes Schaltungsdiagramm einer alternativen Ausführungsform eines Netzteiles 92 für die Steuereinheit 20 der Bolzenschweißanlage der Fig. 1.

Das Netzteil 92 weist auf der Gleichrichterseite einen Vollbrücken-Wechselrichter 94 und daran angeschlossen einen Transformator TWT1, 96 auf. Eine Sekundärseite des Transformators 96 ist mit einer Mittenanzapfung 98 versehen.

Ferner ist an der Sekundärseite des Transformators 96 ein Vollwellengleichrichter 100 vorgesehen, der in Reihe mit einem Widerstand RHS und einer Induktivität LHS liegt. An deren Ausgang liegt eine Versorgungsgleichspannung 40'.

Generell gilt in Bezug auf das Netzteil 92 sowie die weiteren nachfolgend beschriebenen Ausführungsformen, dass die Beschreibung des Netzteiles 22 der Fig. 3 vollumfänglich hierauf anwendbar ist, lediglich auf Unterschiede wird im Folgenden eingegangen.

Im Unterschied zu dem Netzteil 22 weist das Netzteil 92 auf der Wechselrichterseite lediglich einen Längszweig 102 mit einem ersten Schaltelement S1' und einem zweiten Schaltelement S2' auf. Die Schaltelemente S1', S2' können wiederum beispielsweise als IGBT-Bauelemente ausgebildet sein.

Im Unterschied zu dem Netzteil 22 sind bei der vorliegenden Ausführungsform somit lediglich zwei solcher vergleichsweise teuren Bauteile notwendig.

Zwischen den zwei Schaltelementen ist in dem Längszweig 102 eine Induktivität LZ vorgesehen, die mit einem Mittenabgriff 104 versehen ist. Der Mittenabgriff 104 ist mit der Mittenanzapfung 98 des Transformators 96 verbunden, wobei der dadurch gebildete Zweig den Schweißkreis 43' mit der Lichtbogenstrecke 32' bildet.

In der ersten Betriebsart ist das erste Schaltelement S1' geschlossen und das zweite Schaltelement S2' geöffnet. In der zweiten Betriebsart ist es genau umgekehrt, so dass in dem Schweißkreis 43' Schweißströme Iₛ unterschiedlicher Polarität fließen können.

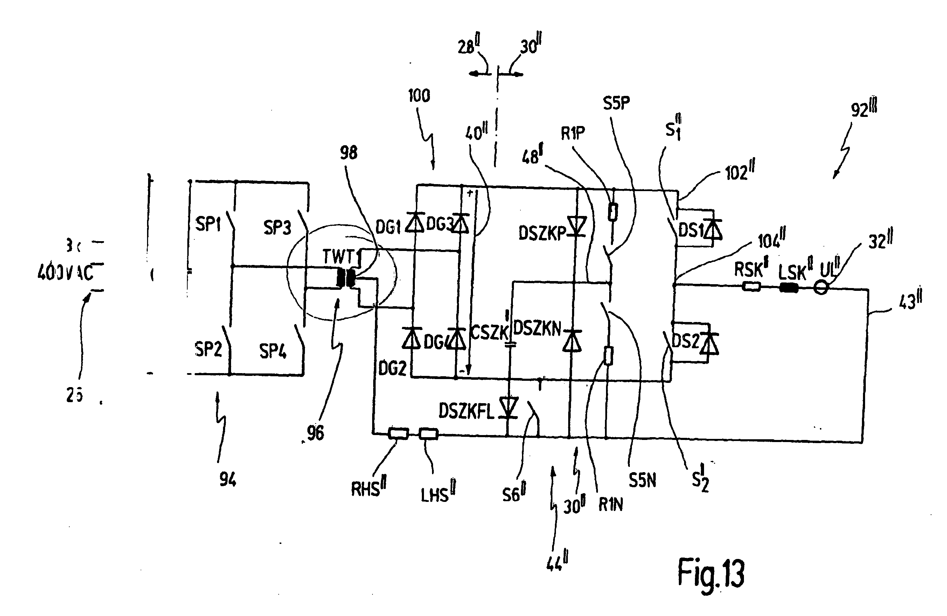

Fig. 13 zeigt ein Schaltungsdiagramm einer weiteren alternativen Ausführungsform eines Netzteiles 92''. Gleiche Elemente sind daher mit gleichen Bezugsziffern versehen. Im Folgenden wird lediglich auf die Unterschiede eingegangen.

So weist das Netzteil 92'' zwischen der Versorgungsgleichspannung 40'' und dem Längszweig 102'' einen Zwischenkreis 44'' auf.

Der Zwischenkreis 44'' entspricht in seiner Funktion und Aufgabe dem Zwischenkreis 44 des Netzteils 22 der Fig. 3.

Der Zwischenkreis 44' ' weist einen ersten Längszweig mit zwei antiparallel geschalteten Dioden DSZKP, DSZKN auf. Der erste Längszweig des Zwischenkreises 44" ist zwischen einem positiven Pol der Versorgungsgleichspannung 40" und dem Ausgang des Schweißkreises 43'' angeschlossen.

Parallel hierzu ist ein zweiter Längskreis vorgesehen, der zwei erste Zwischenkreisschalter S5P, S5N aufweist. Die ersten Zwischenkreisschalter S5P, S5N sind jeweils seriell mit einem Widerstand R1P, R1N verbunden.

Zwischen den ersten Zwischenkreisschaltern S5P, S5N ist ein Zwischenkreisquerzweig 48" angeschlossen, der auch mit einem Knoten zwischen den zwei Dioden DSZKP, DSZKN verbunden ist. Ferner ist dieser Knoten über einen Zwischenkreiskondensator CSZK" mit dem negativen Pol der Versorgungsgleichspannung 40'' verbunden.

Der negative Pol der Versorgungsgleichspannung 40'' ist über eine weitere Freilaufdiode DSZKFL mit dem Ausgang des Schweißkreises 43' ' verbunden. Parallel hierzu ist ein zweiter Zwischenkreisschalter S6'' angeschlossen.

Um Überspannungsspitzen aufzunehmen und ein sicheres Zünden des Lichtbogens beim Stromnulldurchgang zu ermöglichen, wird je nach Polarität entweder der Schalter S5P oder der Schalter S5N geschlossen.

Der Schalter S6'' dient zum Entladen des Zwischenkreiskondensators CSZK' '.

Im Übrigen ist die Funktionsweise des Netzteils 92' ' identisch zu jener des Netzteiles 22 der Fig. 3.

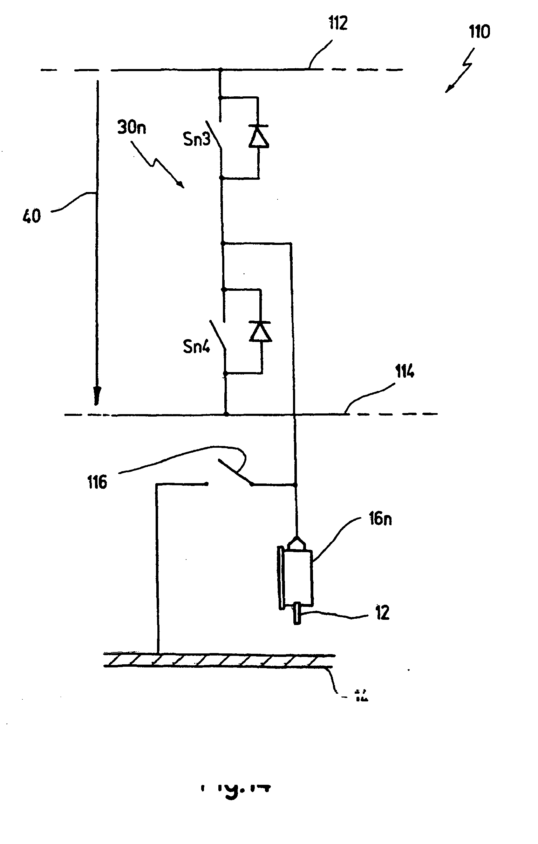

Fig. 14 zeigt eine Schweißanlage 110, bei der zwischen einem ersten Pol 112 und einem zweiten Pol 114, an denen die Versorgungsgleichspannung 40 des Netzteils 22 der Fig. 3 liegt, eine Mehrzahl von Wechselrichtern 30n anschließbar sind.

Jeder der zusätzlichen Wechselrichter 30n weist anstelle einer H-Brückenschaltung lediglich eine Halbbrücke mit zwei Schaltern Sn3, Sn4 auf, wobei der Mittenabgriff hierzwischen mit einem weiteren Schweißkopf 16n verbunden ist.

Das Netzteil 22 ist so dimensioniert, dass jeweils ein Schweißprozess damit versorgt werden kann. Daher können die weiteren Wechselrichter 30n lediglich zeitlich sukzessive betrieben werden. Um dies zu gewährleisten, ist ein Schalter 116 vorgesehen, der den Mittenabgriff zwischen den zwei Schaltern der Halbbrücke mit Masse bzw. dem Werkstück 14 verbindet. Lediglich dann, wenn der jeweilige Wechselrichter 30n aktiviert ist, wird der Schalter 116 geöffnet, wobei dann die jeweils anderen Schalter 116 der anderen Wechselrichter geschlossen werden.

Generell ist es denkbar, eine Mehrzahl n solcher Halbbrückenschaltungen für eine entsprechende weitere Mehrzahl von Schweißprozessen vorzusehen. Der Wert von n kann beispielsweise im Bereich 1 ≤ n ≤ 5 liegen.

Anstelle des Schalters 116 können auch geeignete Widerstandsschaltungen vorgesehen sein, um das Auftreten unzulässiger Spannungen an den nicht schweißenden Schweißköpfen zu verhindern.

Die an den nicht schweißenden Schweißwerkzeugen auftretenden und berührbaren Spannungen dürfen zulässige Berührungsspannungen nicht überschreiten. Ferner muss die an dem schweißenden Schweißwerkzeug auftretende erhöhte Verlustleistung vom Widerstand (falls kein Schalter vorgesehen ist) verkraftet werden können.

Ferner wird vorgesehen, dass die Schweiß- und Masseleitungen generell als
- verdrilltes Leitungspaket oder als
- aufeinanderliegende Flachbandleitungen mit sehr geringem Leitungsabstand oder als
- koaxiales Kabel mit Hin- und Rückleitung
ausgelegt werden.

Hierdurch kann die Induktivität LSK des Schweißkreises bei großen Entfernungen zwischen Energiequelle und Schweißstelle (z.B. > 12 m) so weit reduziert werden, dass die Dauer eines Polaritätswechsels bei maximalem Schweißstrom maximal 2 ms betragen kann.

Ferner ist für die Auslegung der Netzteile 22, 92, 92' ' Folgendes zu berücksichtigen:

Der Zwischenkreiskondensator sollte in der Regel so groß ausgelegt werden, dass die gesamte induktive Energie des Sekundärkreises (insbesondere Schweißkreises) im Fehlerfall aufgenommen werden kann.

Ferner ist die Entladung (über die Schalter S6) des Zwischenkreiskondensators während der Schweißung nur bei sehr kleinen Kondensatorwerten oder sehr großer Außenkreisinduktivität notwendig.

Die Hauptstromdrossel LHS spielt eine begleitende Rolle, da sie bei begrenzter Zündüberspannung ein sicheres Wiederzünden des Lichtbogens beim Polaritätswechsel in der Regel nicht alleine garantieren kann.

Ferner dient der in Reihe mit dem Schalter S5 angeordnete Widerstand R1 zum Schutz des Schalters gegen die bei Kurzschlüssen auftretenden Überströme.

Durch den Polaritätswechsel mit Zwischenspeichern der induktiven Energien im Zwischenkreiskondensator ergeben sich sehr schnelle Polaritätswechselzeiten.

## Patentansprüche

1. Verfahren zum Erzeugen eines elektrischen Lichtbogenstromes (36; Iₛ) mit den Schritten:
- Bereitstellen einer Versorgungsgleichspannung;
- Einspeisen der Versorgungsgleichspannung in einen Wechselrichter (30), der vier steuerbare Schaltelemente (S1 - S4) aufweist, die zueinander in einer H-Brückenschaltung mit zwei parallelen Längszweigen und einem Querzweig (43) angeordnet sind, wobei eine Lichtbogenstrecke (32) in dem Querzweig (43) angeordnet ist, und
- Ansteuern von jeweils diagonal zueinander angeordneten Schaltelementen (S1, S4 bzw. S2, S3), derart, dass in einer ersten Betriebsart ein positiver Lichtbogenstrom (36; Iₛ) bzw. in einer zweiten Betriebsart ein negativer Lichtbogenstrom (36; Iₛ) durch den Querzweig (43) fließt,
**dadurch gekennzeichnet, dass**
das Verfahren zum Kurzzeit-Lichtbogenbolzenschweißen ausgelegt ist, wobei ein Bolzen (12) auf ein Werkstück (14) aufzuschweißen ist, wobei eine Mehrzahl von Wechselrichtern (30n) an die Versorgungsgleichspannung (40) angeschlossen ist, und wobei die Mehrzahl von Wechselrichtern (30n) zeitlich versetzt angesteuert wird, um eine entsprechende Mehrzahl von Schweißprozessen zeitlich versetzt durchführen zu können, wobei bei einem Wechsel der Betriebsart Hilfsenergie, die in einem Energiespeicher (CSZK, LHS; CSZK'', LHS") gespeichert ist, dazu verwendet wird, dass der Lichtbogenstrom (36; Iₛ) nicht lückt und/oder die Steigung des Lichtbogenstromes (36; Iₛ) nicht zu Null wird, wobei die Hilfsenergie in einem Zwischenkreis (44) gespeichert wird, der eingangsseitig mit der Versorgungsgleichspannung (40) verbunden ist und der ausgangsseitig mit dem Wechselrichter (30) verbunden ist, und wobei der Zwischenkreis (44) wenigstens einen ersten Zwischenkreisschalter (S5; S5P'', S5N'') aufweist, der so angesteuert wird, dass die Hilfsenergie bei einem Wechsel der Betriebsart zur Verfügung gestellt wird.

2. Verfahren nach Anspruch 1, wobei der Zwischenkreis (40; 40'') wenigstens einen zwischenkreiskondensator (CSZK; CSZK'') aufweist, in dem Hilfsenergie gespeichert wird.

3. Verfahren nach einem der Ansprüche 1 - 2, wobei der Zwischenkreis (44; 44'') einen ersten Zwischenkreislängszweig aufweist, der einen Zwischenkreiskondensator (CSZK; CSZK''), in dem Hilfsenergie gespeichert wird, und wenigstens eine Zwischenkreisdiode (DSZK; DSZKP, DSZKN) aufweist.

4. Verfahren nach Anspruch 3" wobei der erste Zwischenkreislängszweig parallel zu der Versorgungsgleichspannung (40) angeschlossen ist.

5. Verfahren nach Anspruch 3 oder 4, wobei der Zwischenkreis (44) einen zweiten Zwischenkreislängszweig aufweist, der parallel zu der Versorgungsgleichspannung (40) angeschlossen ist und wenigstens einen ersten Zwischenkreisschalter (S5) aufweist, der so angesteuert wird, dass Hilfsenergie des Zwischenkreises (44) bei Bedarf zur Verfügung gestellt wird.

6. Verfahren nach Anspruch 5, wobei die Hilfsenergie bei Bedarf über wenigstens einen Widerstand (R1) bereitgestellt wird.

7. Verfahren nach Anspruch 5 oder 6, wobei der zweite Zwischenkreislängszweig wenigstens einen zweiten Zwischenkreisschalter (S6) aufweist, der seriell mit dem ersten Zwischenkreisschalter (S5) verbunden ist und so angesteuert wird, dass der Zwischenkreiskondensator (CSZK) während des Betriebs in einer Betriebsart zumindest teilweise entladen wird.

8. Verfahren nach Anspruch 7, wobei der Zwischenkreiskondensator (CSZK) unmittelbar nach dem Ende eines Schweißprozesses vollständig entladen wird.

9. Verfahren nach Anspruch 7 oder 8, wobei der Zwischenkreiskondensator (CSZK) über einen Widerstand (R2) entladen wird.

10. Verfahren nach Anspruch 5, wobei der Zwischenkreis (44; 44'') einen Zwischenkreisquerzweig (48; 48") aufweist, der den ersten und den zweiten Zwischenkreislängszweig miteinander verbindet.

11. Verfahren nach Anspruch 10, wobei der Zwischenkreisquerzweig (48) zwischen dem ersten und dem zweiten Zwischenkreisschalter (S5, S6) angeschlossen ist.

12. Verfahren nach einem der Ansprüche 1 - 11, wobei parallel zu den Längszweigen der H-Brückenschaltung (42) eine C-Snubber-Schaltung (C2) angeordnet ist, die dazu dient, Überspannungsspitzen beim Ausschalten von zuvor eingeschalteten Schaltelementen (S1-S4) zu unterdrücken, und ferner dazu dient, bei einem Wechsel der Betriebsart durch darin gespeicherte Hilfsenergie beginnend mit dem Nulldurchgang des Lichtbogenstromes (36; Iₛ) die Steigung des Lichtbogenstromes (36; Iₛ) zu vergrößern, um das Wiederzünden des Lichtbogens (32) im Nulldurchgang zu unterstützen.

13. Verfahren nach einem der Ansprüche 1 - 12, wobei parallele zu jedem der vier Schaltelemente (S1-S4; S1', S2'; S1", S2'') eine Snubber-Schaltung (46) angeordnet ist, wobei die Snubber-Schaltungen (46) dazu dienen, Überspannungsspitzen beim Ausschalten von zuvor eingeschalteten Schaltelementen (S1-S4) zu unterdrücken, und ferner dazu dient, bei einem Wechsel der Betriebsart durch darin gespeicherte Hilfsenergie beginnend mit dem Nulldurchgang des Lichtbogenstromes (36; Iₛ) die Steigung des Lichtbogenstromes (36; Iₛ) zu vergrößern, um das Wiederzünden des Lichtbogens (32) im Nulldurchgang zu unterstützen.

14. Verfahren nach Anspruch 13, wobei die Snubber-Schaltungen (46) jeweils als RCD-Snubber-Schaltungen(46) ausgebildet sind und einen Kondensator (Cₓ) zur Zwischenspeicherung von Hilfsenergie aufweisen.

15. Verfahren nach einem der Ansprüche 1 - 14, wobei die Schaltelemente (S1-S4; S1', S2'; S1" , S2") bei einem Wechsel der Betriebsart so geschaltet werden, dass das Einschalten der zuvor ausgeschalteten Schaltelemente entweder zeitgleich oder kurz verzögert zu dem Ausschalten der zuvor eingeschalteten Schaltelemente erfolgt.

16. Verfahren nach einem der Ansprüche 1 - 15, wobei die Schaltelemente (S1-S4; S1', S2'; S1" , S2") bei einem Wechsel der Betriebsart so geschaltet werden, dass das Einschalten der zuvor ausgeschalteten Schaltelemente vor dem Nulldurchgang des Lichtbogenstromes (36; Iₛ) erfolgt.

17. Verfahren nach einem der Ansprüche 1 bis 16, wobei die Anzahl n der Wechselrichter (30n) im Bereich von 2 bis 5 liegt.

18. Verfahren nach einem der Ansprüche 1 bis 17, wobei ein erster Wechselrichter (30) eine H-Brückenschaltung mit vier steuerbaren Schaltelementen (S1-S4) aufweist und wobei für jeden weiteren Wechselrichter (30n) ein Wechselrichterzweig mit zwei in Reihe geschalteten Schaltelementen (Sn3, Sn4) vorgesehen ist.

19. Verfahren nach einem der Ansprüche 1 - 18, wobei die Stärke des Lichtbogenstromes (36; Iₛ) für aufeinanderfolgende Teilabschnitte eines Schweißprozesse individuell einstellbar ist.

20. Verfahren nach einem der Ansprüche 1 - 19, wobei die Dauer des Lichtbogenstromes (36; Iₛ) für aufeinanderfolgende Teilabschnitte eines Schweißprozesses individuell einstellbar ist.

21. Verfahren nach einem der Ansprüche 1 - 20, wobei der Lichtbogenstrom (36; Iₛ) für die erste und die zweite Betriebsart getrennt einstellbar ist.

22. Verfahren nach einem der Ansprüche 1 - 21, wobei die Frequenz des Wechsels der Betriebsart im Bereich zwischen 0 Hz und 500 Hz einstellbar ist.

23. Verfahren nach Anspruch 1, wobei die Versorgungsgleichspannung (40) mittels eines Inverters und eines Transformators (TWT1) und einer anschließenden Gleichrichtung bereitgestellt wird.

24. Netzteil (22) für eine Anlage (10) zum Kurzzeit-Lichtbogenschweißen, bei dem ein Bolzen (12) auf ein Werkstück (14) aufzuschweißen ist, wobei das Netzteil (22) zur Durchführung des Verfahrens nach einem der Ansprüche 1 - 23 ausgelegt ist, mit
- Mitteln zum Bereitstellen einer Versorgungsgleichspannung;
- Mitteln zum Einspeisen der Versorgungsgleichspannung in einen Wechselrichter (30), der vier steuerbare Schaltelemente (S1 - S4) aufweist, die zueinander in einer H-Brückenschaltung mit zwei parallelen Längszweigen und einem Querzweig (43) angeordnet sind, wobei eine Lichtbogenstrecke (32) in dem Querzweig (43) angeordnet ist, und
- Mitteln zum Ansteuern von jeweils diagonal zueinander angeordneten Schaltelementen (S1, S4 bzw. S2, S3), derart, dass in einer ersten Betriebsart ein positiver Lichtbogenstrom (36; Iₛ) bzw. in einer zweiten Betriebsart ein negativer Lichtbogenstrom (36; Iₛ) durch den Querzweig (43) fließt,
**dadurch gekennzeichnet, dass**
eine Mehrzahl von Wechselrichtern (30n) an die Versorgungsgleichspannung (40) angeschlossen ist, und wobei die Mehrzahl von Wechselrichtern (30n) zeitlich versetzt angesteuert wird, um eine entsprechende Mehrzahl von Schweißprozessen zeitlich versetzt durchführen zu können, wobei bei einem Wechsel der Betriebsart Hilfsenergie, die in einem Energiespeicher (CSZK, LHS; CSZK'', LHS'') gespeichert ist, dazu verwendet wird, dass der Lichtbogenstrom (36; Iₛ) nicht lückt und/oder die Steigung des Lichtbogenstromes (36; Iₛ) nicht zu Null wird, wobei die Hilfsenergie in einem Zwischenkreis (44) gespeichert wird, der eingangsseitig mit der Versorgungsgleichspannung (40) verbunden ist und der ausgangsseitig mit dem Wechselrichter (30) verbunden ist, und wobei der Zwischenkreis (44) wenigstens einen ersten Zwischenkreisschalter (S5; S5P'', S5N'') aufweist, der so angesteuert wird, dass die Hilfsenergie bei einem Wechsel der Betriebsart zur Verfügung gestellt wird.

25. Anlage (10) zum Kurzzeit-Lichtbogenschweißen, mit einem Schweißkopf (16) und einer Steuereinheit (20), wobei die Steuereinheit (20) ein Netzteil (22) nach Anspruch 24 aufweist.

## Claims

1. Method for producing an electrical arc current (36; Iₛ) comprising the following steps:
providing a DC supply voltage;
feeding the DC supply voltage into an inverter (30), which has four controllable switching elements (S1 - S4), which are arranged with respect to one another in an H bridge circuit with two series arms connected in parallel and a shunt arm (43), wherein an arc gap (32) is arranged in the shunt arm (43), and
driving switching elements (S1, S4 and S2, S3) which are arranged diagonally with respect to one another in such a way that, in a first operating mode, a positive arc current (36; Iₛ) flows through the shunt arm (43) and, in a second operating mode, a negative arc current (36; Iₛ) flows through said shunt arm (43),
**characterized in that**
the method is designed for short-cycle stud welding, wherein a stud (12) is intended to be welded onto a workpiece (14), wherein a plurality of inverters (30n) is connected to the DC supply voltage (40), and wherein the plurality of inverters (30n) are driven in temporally offset fashion in order to make it possible to implement a corresponding plurality of welding processes in temporally offset fashion,
wherein, in the event of a change in the operating mode, auxiliary energy which is stored in an energy store (CSZK, LHS; CSZK", LHS") is used to prevent the arc current (36; Iₛ) from pulsating, and/or to prevent the gradient of the arc current (36; Iₛ) from becoming zero, wherein the auxiliary energy is stored in an intermediate circuit (44), which is connected on the input side to the DC supply voltage (40) and is connected on the output side to the inverter (30), and wherein the intermediate circuit (40; 40") has at least one first intermediate circuit switch (S5; S5P", S5N"), which is driven in such a way that the auxiliary energy is made available in the event of a change in the operating mode.

2. Method according to Claim 1, wherein the intermediate circuit (44; 44") has at least one intermediate circuit capacitor (CSZK; CSZK"), in which auxiliary energy is stored.

3. Method according to one of Claims 1 - 2, wherein the intermediate circuit (44; 44") has a first intermediate circuit series arm, which has an intermediate circuit capacitor (CSZK; CSZK") in which auxiliary energy is stored and at least one intermediate circuit diode (DSZK; DSZKP, DSZKN).

4. Method according to Claim 3, wherein the first intermediate circuit series arm is connected in parallel with the DC supply voltage (40).

5. Method according to Claim 3 or 4, wherein the intermediate circuit (44) has a second intermediate circuit series arm, which is connected in parallel with the DC supply voltage (40) and has at least one first intermediate circuit switch (S5), which is driven in such a way that auxiliary energy from the intermediate circuit (44) is made available as required.

6. Method according to Claim 5, wherein the auxiliary energy is provided as required via at least one resistor (R1).

7. Method according to Claim 5 or 6, wherein the second intermediate circuit series arm has at least one second intermediate circuit switch (S6), which is connected in series with the first intermediate circuit switch (S5) and is driven in such a way that the intermediate circuit capacitor (CSZK) is at least partially discharged during operation in an operating mode.

8. Method according to Claim 7, wherein the intermediate circuit capacitor (CSZK) is discharged completely directly following the end of a welding process.

9. Method according to Claim 7 or 8, wherein the intermediate circuit capacitor (CSZK) is discharged via a resistor (R2).

10. Method according to Claim 5, wherein the intermediate circuit (44; 44") has an intermediate circuit shunt arm (48; 48"), which connects the first and the second intermediate circuit series arm to one another.

11. Method according to Claim 10, wherein the intermediate circuit shunt arm (48) is connected between the first and the second intermediate circuit switches (S5, S6).

12. Method according to one of Claims 1 - 11, wherein a C-snubber circuit (C2) is arranged in parallel with the series arms of the H bridge circuit (42), said C-snubber circuit serving the purpose of suppressing overvoltage peaks when switching off previously switched-on switching elements (S1-S4) and additionally serving the purpose of increasing the gradient of the arc current (36; Iₛ) in the event of a change in the operating mode by virtue of auxiliary energy stored therein, beginning with the zero crossing of the arc current (36; Iₛ) in order to assist in restriking of the arc (32) at the zero crossing.

13. Method according to one of Claims 1 - 12, wherein a snubber circuit (46) is arranged in parallel with each of the four switching elements (S1-S4; S1', S2'; S1", S2"), wherein the snubber circuits (46) serve the purpose of suppressing overvoltage peaks when switching off previously switched-on switching elements (S1-S4) and additionally serve the purpose of increasing the gradient of the arc current (36; Iₛ) in the event of a change in the operating mode by virtue of auxiliary energy stored therein, beginning with the zero crossing of the arc current (36; Iₛ) in order to assist in restriking of the arc (32) at the zero crossing.

14. Method according to Claim 13, wherein the snubber circuits (46) are each in the form of RCD snubber circuits (46) and have a capacitor (Cₓ) for bufferstoring auxiliary energy.

15. Method according to one of Claims 1 - 14, wherein the switching elements (S1-S4; S1', S2'; S1", S2") are switched in the event of a change in the operating mode in such a way that the previously switched-off switching elements are switched on either at the same time as or with a short delay relative to the time at which the previously switched-on switching elements are switched off.

16. Method according to one of Claims 1 - 15, wherein the switching elements (S1-S4; S1', S2'; S1", S2") are switched in the event of a change in the operating mode in such a way that the previously switched-off switching elements are switched on prior to the zero crossing of the arc current (36; Iₛ).

17. Method according to one of Claims 1 to 16, wherein the number n of inverters (30n) is in the range of from 2 to 5.

18. Method according to one of Claims 1 to 17, wherein a first inverter (30) has an H bridge circuit with four controllable switching elements (S1-S4), and wherein an inverter branch with two switching elements (Sn3, Sn4) connected in series is provided for each further inverter (30n).

19. Method according to one of Claims 1 - 18, wherein the intensity of the arc current (36; Is) for successive time segments in a welding process can be set individually.

20. Method according to one of Claims 1 - 19, wherein the duration of the arc current (36; Iₛ) for successive time segments in a welding process can be set individually.

21. Method according to one of Claims 1 - 20, wherein the arc current (36; Iₛ) can be set separately for the first and second operating modes.

22. Method according to one of Claims 1 - 21, wherein the frequency of the change in operating mode can be set in the range of between 0 Hz and 500 Hz.

23. Method according to Claim 1, wherein the DC supply voltage (40) is provided by means of an inverter and a transformer (TWT1) and subsequent rectification.

24. Switched-mode power supply (22) for an installation (10) for short-cycle arc welding, in which a stud (12) is intended to be welded onto a workpiece (14), wherein the switched-mode power supply (22) is configured for implementing the method according to one of Claims 1 - 35, comprising
means for providing a DC supply voltage;
means for feeding the DC supply voltage into an inverter (30), which has four controllable switching elements (S1 - S4), which are arranged with respect to one another in an H bridge circuit with two series arms connected in parallel and a shunt arm (43), wherein an arc gap (32) is arranged in the shunt arm (43), and
means for driving switching elements (S1, S4 and S2, S3) which are arranged diagonally with respect to one another in such a way that, in a first operating mode, a positive arc current (36; Iₛ) flows through the shunt arm (43) and, in a second operating mode, a negative arc current (36; Iₛ) flows through said shunt arm (43),
**characterized in that**
a plurality of inverters (30n) is connected to the DC supply voltage (40), and wherein the plurality of inverters (30n) is driven in temporally offset fashion in order to make it possible to implement a corresponding plurality of welding processes in temporally offset fashion,
wherein, in the event of a change in the operating mode, auxiliary energy which is stored in an energy store (CSZK, LHS; CSZK", LHS") is used to prevent the arc current (36; Iₛ) from pulsating, and/or to prevent the gradient of the arc current (36; Iₛ) from becoming zero, wherein the auxiliary energy is stored in an intermediate circuit (44), which is connected on the input side to the DC supply voltage (40) and is connected on the output side to the inverter (30), and wherein the intermediate circuit (40; 40") has at least one first intermediate circuit switch (S5; S5P", S5N"), which is driven in such a way that the auxiliary energy is made available in the event of a change in the operating mode.

25. Installation (10) for short-cycle arc welding, with a welding head (16) and a control unit (20), wherein the control unit (20) has a switched-mode power supply (22) according to Claim 24.

## Revendications

1. Procédé pour générer un courant d'arc électrique (36 ; Iₛ) comprenant les étapes suivantes :
mise à disposition d'une tension continue d'alimentation ;
injection de la tension continue d'alimentation dans un onduleur (30), qui présente quatre éléments de commutation (S1-S4) contrôlables, qui sont disposés les uns par rapport aux autres dans un circuit à pont en H avec deux branches longitudinales parallèles et une branche transversale (43),
un tronçon d'arc (32) étant disposé dans la branche transversale (43), et
activation d'éléments de commutation (S1, S4 ou S2, S3) disposés à chaque fois en diagonale les uns par rapport aux autres, de telle sorte que,
dans un premier mode de service, un courant d'arc positif (36 ; Iₛ) ou, dans un second mode de service, un courant d'arc négatif (36 ; Iₛ) circule dans la branche transversale (43),
**caractérisé en ce que**
le procédé est conçu pour le soudage de goujons à l'arc de courte durée, un goujon (12) devant être soudé sur une pièce d'oeuvre (14), une pluralité d'onduleurs (30n) étant raccordée à la tension continue d'alimentation (40), et la pluralité d'onduleurs (30n) étant activée de façon décalée dans le temps pour pouvoir effectuer de façon décalée dans le temps une pluralité correspondante de processus de soudage, de l'énergie auxiliaire, qui est stockée dans un accumulateur d'énergie (CSZK, LHS ; CSZK", LHS"), étant utilisée lors d'un changement du mode de service, de telle sorte que le courant d'arc (36 ; Iₛ) ne fasse pas défaut et/ou que la pente du courant d'arc (36 ; Iₛ) ne devienne pas égale à zéro, l'énergie auxiliaire étant stockée dans un circuit intermédiaire (44), qui est relié côté entrée à la tension continue d'alimentation (40) et qui est relié côté sortie à l'onduleur (30), et le circuit intermédiaire (44) présentant au moins un premier interrupteur de circuit intermédiaire (S5 ; S5P", S5N"), qui est activé de telle sorte que l'énergie auxiliaire soit mise à disposition lors d'un changement du mode de service.

2. Procédé selon la revendication 1, le circuit intermédiaire (44 ; 44") présentant au moins un condensateur de circuit intermédiaire (CSZK ; CSZK") dans lequel de l'énergie auxiliaire est stockée.

3. Procédé selon l'une quelconque des revendications 1 et 2, le circuit intermédiaire (44 ; 44") présentant une première branche longitudinale de circuit intermédiaire, qui est un condensateur de circuit intermédiaire (CSZK ; CSZK"), dans lequel de l'énergie auxiliaire est stockée, et au moins une diode de circuit intermédiaire (DSZK, DSZKP, DSZKN).

4. Procédé selon la revendication 3, la première branche longitudinale de circuit intermédiaire étant raccordée parallèlement à la tension continue d'alimentation (40).

5. Procédé selon la revendication 3 ou 4, le circuit intermédiaire (44) présentant une seconde branche longitudinale de circuit intermédiaire, qui est raccordée parallèlement à la tension continue d'alimentation (40) et présente au moins un premier interrupteur de circuit intermédiaire (S5), qui est activé de telle sorte que de l'énergie auxiliaire du circuit intermédiaire (44) soit mise à disposition en cas de besoin.

6. Procédé selon la revendication 5, l'énergie auxiliaire étant mise à disposition en cas de besoin au moyen d'au moins une résistance (R1).

7. Procédé selon la revendication 5 ou 6, la seconde branche longitudinale de circuit intermédiaire présentant au moins un second interrupteur de circuit intermédiaire (S6), qui est relié en série au premier interrupteur de circuit intermédiaire (S5) et est activé de telle sorte que le condensateur de circuit intermédiaire (CSZK) soit déchargé au moins partiellement pendant le fonctionnement dans un mode de service.

8. Procédé selon la revendication 7, le condensateur de circuit intermédiaire (CSZK) étant déchargé complètement directement après la fin d'un processus de soudage.

9. Procédé selon la revendication 7 ou 8, le condensateur de circuit intermédiaire (CSZK) étant déchargé au moyen d'une résistance (R2).

10. Procédé selon la revendication 5, le circuit intermédiaire (44 ; 44") présentant une branche transversale de circuit intermédiaire (48 ; 48"), qui relie l'une à l'autre la première et la seconde branche longitudinale de circuit intermédiaire.

11. Procédé selon la revendication 10, la branche transversale de circuit intermédiaire (48) étant raccordée entre le premier et le second interrupteur de circuit intermédiaire (S5, S6).

12. Procédé selon l'une quelconque des revendications 1 à 11, un circuit d'amortissement C (C2) étant disposé parallèlement aux branches longitudinales du circuit à pont en H (42), lequel sert à supprimer des pics de surtension lors de la déconnexion d'éléments de commutation (S1-S4) enclenchés auparavant et sert également à augmenter la pente du courant d'arc (36 ; Iₛ) lors d'un changement de mode de service par de l'énergie auxiliaire stockée à l'intérieur en commençant par le passage par zéro du courant d'arc (36 ; Iₛ), afin de favoriser le réallumage de l'arc (32) lors du passage par zéro.

13. Procédé selon l'une quelconque des revendications 1 à 12, un circuit d'amortissement (46) étant disposé parallèlement à chacun des quatre éléments de commutation (S1-S4 ; S1', S2' ; S1", S2"), les circuits d'amortissement (46) servant à supprimer des pics de surtension lors de la déconnexion d'éléments de commutation (S1-S4) enclenchés auparavant, et servant également à augmenter la pente du courant d'arc (36 ; Iₛ) lors d'un changement de mode de service par de l'énergie auxiliaire stockée à l'intérieur en commençant par le passage par zéro du courant d'arc (36 ; Iₛ), afin de favoriser le réallumage de l'arc (32) lors du passage par zéro.

14. Procédé selon la revendication 13, les circuits d'amortissement (46) étant conçus à chaque fois sous forme de circuits d'amortissement RCD (46) et présentant un condensateur (Cₓ) pour le stockage intermédiaire d'énergie auxiliaire.

15. Procédé selon l'une quelconque des revendications 1 à 14, les éléments de commutation (S1-S4 ; S1', S2' ; S1", S2") étant commutés lors d'un changement de mode de service, de telle sorte que l'enclenchement des éléments de commutation déconnectés auparavant s'effectue soit simultanément soit avec un léger retard par rapport à la déconnexion des éléments de commutation enclenchés auparavant.

16. Procédé selon l'une quelconque des revendications 1 à 15, les éléments de commutation (S1-S4 ; S1', S2' ; S1", S2") étant commutés lors d'un changement de mode de service, de telle sorte que l'enclenchement des éléments de commutation déconnectés auparavant s'effectue avant le passage par zéro du courant d'arc (36 ; Iₛ).

17. Procédé selon l'une quelconque des revendications 1 à 16, le nombre n des onduleurs (30n) se situant dans la plage de 2 à 5.

18. Procédé selon l'une quelconque des revendications 1 à 17, un premier onduleur (30) présentant un circuit à pont en H avec quatre éléments de commutation (S1-S4) contrôlables et une branche d'onduleur avec deux éléments de commutation (Sn3, Sn4) branchés en série étant prévue pour chaque autre onduleur (30n).

19. Procédé selon l'une quelconque des revendications 1 à 18, l'intensité du courant d'arc (36 ; Iₛ) pouvant être réglée individuellement pour des tronçons successifs d'un processus de soudage.

20. Procédé selon l'une quelconque des revendications 1 à 19, la durée du courant d'arc (36 ; Iₛ) pouvant être réglée individuellement pour des tronçons successifs d'un processus de soudage.

21. Procédé selon l'une quelconque des revendications 1 à 20, le courant d'arc (36 ; Iₛ) pouvant être réglé séparément pour le premier et le second mode de service.

22. Procédé selon l'une quelconque des revendications 1 à 21, la fréquence du changement de mode de service pouvant être réglée dans la plage comprise entre 0 Hz et 500 Hz.

23. Procédé selon la revendication 1, la tension continue d'alimentation (40) étant mise à disposition au moyen d'un inverseur et d'un transformateur (TWT1) et d'un redressement consécutif.

24. Bloc d'alimentation (22) pour une installation (10) pour le soudage de goujons à l'arc de courte durée, dans lequel un goujon (12) doit être soudé sur une pièce d'oeuvre (14), le bloc d'alimentation (22) étant conçu pour la mise en oeuvre du procédé selon l'une quelconque des revendications 1 à 23, comprenant
des moyens pour la mise à disposition d'une tension continue d'alimentation ;
des moyens pour l'injection de la tension continue d'alimentation dans un onduleur (30), qui présente quatre éléments de commutation (S1-S4) contrôlables, qui sont disposés les uns par rapport aux autres dans un circuit à pont en H avec deux branches longitudinales parallèles et une branche transversale (43), un tronçon d'arc (32) étant disposé dans la branche transversale (43), et
des moyens pour l'activation d'éléments de commutation (S1, S4 ou S2, S3) disposés à chaque fois en diagonale les uns par rapport aux autres, de telle sorte que, dans un premier mode de service, un courant d'arc positif (36 ; Iₛ), ou, dans un second mode de service, un courant d'arc négatif (36 ; Iₛ), circule dans la branche transversale (43),
**caractérisé en ce**
**qu'**une pluralité d'onduleurs (30n) est raccordée à la tension continue d'alimentation (40), et la pluralité d'onduleurs (30n) étant activée de façon décalée dans le temps pour pouvoir effectuer une pluralité correspondante de processus de soudage de façon décalée dans le temps, de l'énergie auxiliaire, qui est stockée dans un accumulateur d'énergie (CSZK, LHS ; CSZK", LHS"), étant utilisée lors d'un changement du mode de service, de telle sorte que le courant d'arc (36 ; Iₛ) ne fasse pas défaut et/ou que la pente du courant d'arc (36 ; Iₛ) ne devienne pas égale à zéro, l'énergie auxiliaire étant stockée dans un circuit intermédiaire (44), qui est relié côté entrée à la tension continue d'alimentation (40) et qui est relié côté sortie à l'onduleur (30), et le circuit intermédiaire (44) présentant au moins un premier interrupteur de circuit intermédiaire (S5 ; S5P", S5N"), qui est activé de telle sorte que l'énergie auxiliaire soit mise à disposition lors d'un changement du mode de service.

25. Installation (10) pour le soudage à l'arc de courte durée, comprenant une tête de soudage (16) et une unité de commande (20), l'unité de commande (20) présentant un bloc d'alimentation (22) selon la revendication 24.
